# EUROPEAN PATENT APPLICATION

(11) **EP 4 344 001 A2**
(43) Date of publication of application: **27.03.2024**
(21) Application number: 23185292.2
(22) Date of filing: 13.07.2023
(51) Int. Cl.: H02J 1/04, C25B 15/02, H02J 3/00, H02J 3/28, H02J 15/00

(54) **HYDROGEN SYSTEM OPERATION PLANNING DEVICE**

(30) Priority: 20.09.2022 JP 2022148991
(71) Applicant: Kabushiki Kaisha Toshiba, Minato-ku Tokyo 105-0023 (JP); Toshiba Energy Systems & Solutions Corporation, Saiwai-ku Kawasaki-shi Kanagawa (JP)
(72) Inventor: BABA, Junsuke, Kawasaki-shi Kanagawa (JP); AKIBA, Takashi, Kawasaki-shi Kanagawa (JP); YAMANE, Fumiyuki, Kawasaki-shi Kanagawa (JP)
(74) Representative: Hoffmann Eitle

(57) **Abstract**

To accurately prepare an operation plan that achieves efficient operation in a hydrogen system. In a hydrogen system operation planning device of an embodiment, an acquisition unit is configured to acquire performance data regarding performance of a plurality of hydrogen production devices and tentative operation plan data regarding a tentative operation plan tentatively prepared for the operation plan. A prediction unit is configured to acquire performance prediction data by predicting the performance of the plurality of hydrogen production devices during the planning target period based on the performance data and tentative operation plan data acquired by the acquisition unit. A planning unit is configured to acquire the operation plan by correcting the tentative operation plan based on the performance prediction data acquired by the prediction of the prediction unit.

## Description

### FIELD

Embodiments described herein relate generally to a hydrogen system operation planning device.

### BACKGROUND

Hydrogen is attracting attention as clean energy alternative to fossil fuels.

Hydrogen is produced, for example, in a hydrogen system with a hydrogen production device that electrolyzes water. The hydrogen system may have a plurality of hydrogen production devices installed to produce a large amount of hydrogen. Various technologies have been proposed to efficiently produce hydrogen in the hydrogen system equipped with the plurality of hydrogen production devices.

### PRIOR ART DOCUMENT

### PATENT DOCUMENT

[Patent Document 1] Patent Publication No. 6499365
[Patent Document 2] Patent Publication No. 5618952
[Patent Document 3] WO2020/075771

### SUMMARY

### PROBLEMS TO BE SOLVED BY THE INVENTION

In a hydrogen system, a plurality of hydrogen production devices may differ in their performance. For example, the performance among the plurality of hydrogen production devices may differ due to different electrolysis methods, such as alkaline and solid polymer types, or due to variations in members and the like.

Variations in performance may occur among the plurality of hydrogen production devices due to occurrence of deterioration. Deterioration of the hydrogen production device occurs, for example, when the members (electrodes, electrolyte membranes, and other members) forming the hydrogen production device are altered due to operating conditions (startup of operation, shutdown of operation, load fluctuation, cumulative operation time, continuous operation time, and other conditions). For example, operating efficiency, which is a ratio of a hydrogen production amount to a power supply amount, may decrease with the deterioration of the hydrogen production device. In addition, a response time (responsiveness) required for a hydrogen production amount produced by the hydrogen production device to reach a target value may become longer, or a minimum duration at which the hydrogen production device can continue to produce hydrogen in the shortest possible time may become longer. In the hydrogen production device, malfunctions may occur as the performance deteriorates.

In particular, when the hydrogen production device uses power output from a renewable energy power generator to produce hydrogen, the power output from the renewable energy power generator fluctuates, which can easily cause deterioration of the hydrogen production device. Also, when responding to demand response to stabilize a power system, the power supplied to the hydrogen production device fluctuates, which can easily cause deterioration of the hydrogen production device.

In conventional hydrogen production systems equipped with the plurality of hydrogen production devices, it may be difficult to secure a desired hydrogen production amount because an operation plan is prepared without predicting the deterioration in performance of the hydrogen production devices, and thus the plurality of hydrogen production devices cannot be effectively utilized. In addition, it may be difficult to accurately respond to demand response depending on the minimum duration and response time (responsiveness) of the hydrogen production devices.

In addition, it may be necessary to perform maintenance on the plurality of hydrogen production devices at similar times since the deterioration in performance may occur similarly among the plurality of hydrogen production devices. This may result in a situation where operations cannot be performed at the plurality of hydrogen production devices due to maintenance, making it difficult to ensure the desired hydrogen production amount.

Due to the above circumstances, it may not be easy to efficiently produce hydrogen in the hydrogen system with the plurality of hydrogen production devices installed.

Therefore, the problem to be solved by the present invention is to provide a hydrogen system operation planning device capable of accurately preparing an operation plan that achieves efficient operation in a hydrogen system.

### MEANS FOR SOLVING THE PROBLEMS

A hydrogen system operation planning device of this embodiment includes an acquisition unit, a prediction unit, and a planning unit, and prepares an operation plan for operating a plurality of hydrogen production devices during a planning target period in a hydrogen system equipped with the plurality of hydrogen production devices that produce hydrogen by being supplied with power. The acquisition unit is configured to acquire performance data regarding performance of the plurality of hydrogen production devices and tentative operation plan data regarding a tentative operation plan tentatively prepared for the operation plan. The prediction unit is configured to acquire performance prediction data by predicting the performance of the plurality of hydrogen production devices during the planning target period based on the performance data and tentative operation plan data acquired by the acquisition unit. The planning unit is configured to acquire the operation plan by correcting the tentative operation plan based on the performance prediction data acquired by the prediction of the prediction unit.

### BRIEF DESCRIPTION OF THE DRAWINGS

FIG. 1 is a block diagram schematically illustrating an overall configuration including a hydrogen system 100 and a hydrogen system operation planning device 200 in an embodiment.
FIG. 2 is a block diagram illustrating a configuration of the hydrogen system operation planning device 200 according to the embodiment.
FIG. 3A is a diagram illustrating an example of tentative operation plan data D1b in the embodiment.
FIG. 3B is a diagram illustrating an example of performance prediction data D2 in the embodiment.
FIG. 3C is a diagram illustrating an example of operation plan data D3 in the embodiment.
FIG. 3D is a diagram illustrating an example of transition of operating efficiency in the operation plan data D3 in the embodiment.
FIG. 4 is a block diagram schematically illustrating an overall configuration including the hydrogen system 100 and the hydrogen system operation planning device 200 in Modification example 1 of the embodiment.
FIG. 5 is a diagram illustrating an example of generated power prediction data D0a regarding power output by a renewable energy power generator 130 and power supply data D0b regarding the power supplied from the renewable energy power generator 130 to the hydrogen system 100 in Modification example 1 of the embodiment.
FIG. 6 is a diagram illustrating an example of the tentative operation plan data D1b in Modification example 2 of the embodiment.

### DETAILED DESCRIPTION

### [A] Overall configuration

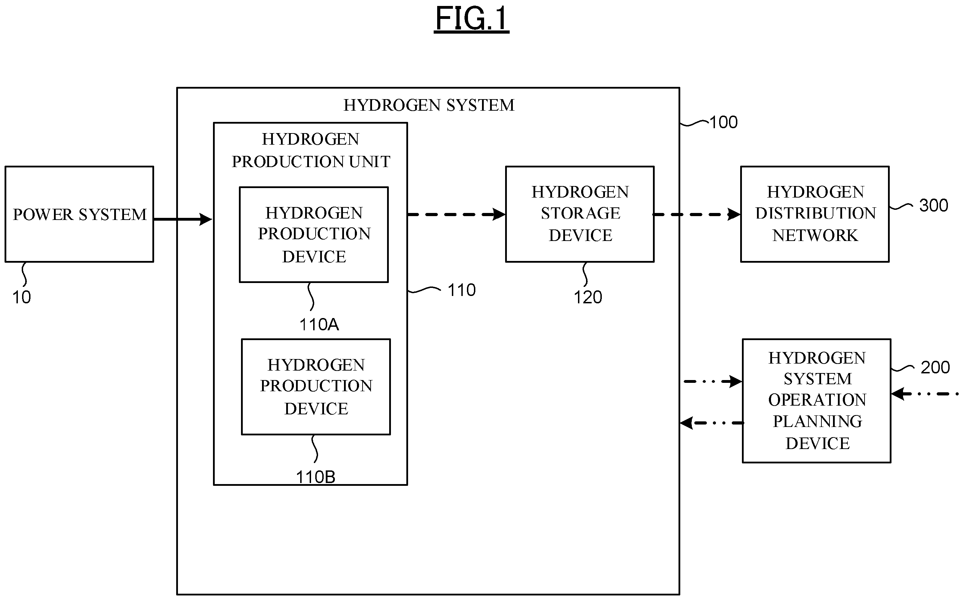

FIG. 1 is a block diagram schematically illustrating an overall configuration including a hydrogen system 100 and a hydrogen system operation planning device 200 in an embodiment.

### [A-1] Hydrogen system 100

As illustrated in FIG. 1, the hydrogen system 100 has a hydrogen production unit 110 and a hydrogen storage device 120 and is configured to perform operations to produce hydrogen based on an operation plan prepared by the hydrogen system operation planning device 200. Each part of the hydrogen system 100 is described in turn.

### [A-1-1] Hydrogen production unit 110

The hydrogen production unit 110 includes a plurality of hydrogen production devices 110A, 110B and is configured to produce hydrogen using power supplied from a power system 10 (power grid). Here, each of the plurality of hydrogen production devices 110A, 110B is, for example, a hydrogen electrolysis device, which generates hydrogen by electrolyzing water. In the hydrogen production unit 110, the plurality of hydrogen production devices 110A, 110B may be installed in series or parallel. Although not illustrated in the figures, auxiliary machines (not illustrated) may be installed in the plurality of hydrogen production devices 110A, 110B.

### [A-1-2] Hydrogen storage device 120

The hydrogen storage device 120 is configured to store hydrogen produced by the hydrogen production unit 110. The hydrogen storage device 120 is, for example, a gas tank that stores hydrogen gas. In addition to this, the hydrogen storage device 120 may also be, for example, a liquefied tank, which is configured to store liquefied hydrogen. Hydrogen stored in the hydrogen storage device 120 is supplied to a hydrogen distribution network 300.

### [A-2] Hydrogen system operation planning device 200

The hydrogen system operation planning device 200 is provided to prepare an operation plan for the plurality of hydrogen production devices 110A, 110B that form the hydrogen production unit 110 in the hydrogen system 100 to be operated during a planning target period TP.

Here, the hydrogen system operation planning device 200 receives input of information regarding each part that forms the hydrogen system 100 from the hydrogen system 100, and input of commands regarding the operation of the hydrogen system 100 from the outside. The hydrogen system operation planning device 200 then prepares an operation plan for the hydrogen system 100 based on the input information and commands.

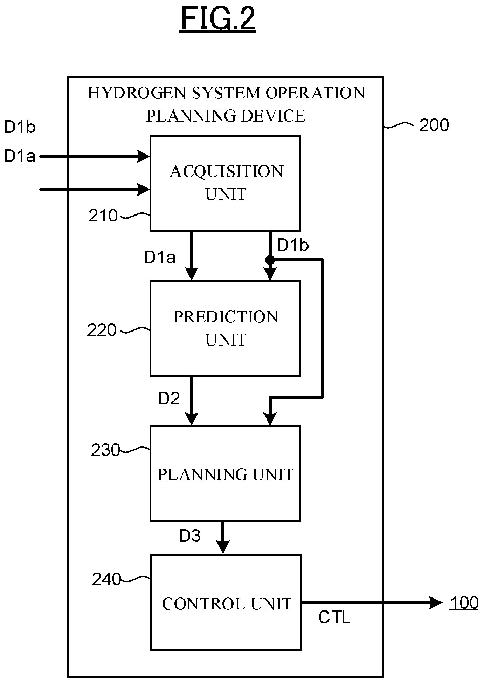

FIG. 2 is a block diagram illustrating a configuration of the hydrogen system operation planning device 200 according to the embodiment.

As illustrated in FIG. 2, the hydrogen system operation planning device 200 includes an acquisition unit 210, a prediction unit 220, a planning unit 230, and a control unit 240. The hydrogen system operation planning device 200 includes arithmetic units (computers) and storage, and the arithmetic unit is configured to function as each part using programs stored by the storage.

### [A-2-1] Acquisition unit 210

The acquisition unit 210 is configured to acquire performance data D1a and tentative operation plan data D1b, as illustrated in FIG. 2.

Here, the performance data D1a are data regarding performance of the plurality of hydrogen production devices 110A, 110B. Concretely, the performance data D1a include data regarding power supplied to the plurality of hydrogen production devices 110A, 110B (electric power, voltage, current, and other data), data regarding hydrogen produced by the plurality of hydrogen production devices 110A, 110B (hydrogen production amount, temperature, pressure, and other data), data regarding a status of the plurality of hydrogen production devices 110A, 110B (failure signals, status signals regarding operation, stoppage, and so on, and other data). The performance data D1a are, for example, transmitted to the acquisition unit 210 from sensors (not illustrated) installed in the plurality of hydrogen production devices 110A, 110B. In addition, the performance data D1a may be, for example, data set in the acquisition unit 210 according to measured values.

The tentative operation plan data D1b are data regarding a tentative operation plan tentatively prepared for an operation plan to operate the plurality of hydrogen production devices 110A, 110B during the planning target period TP. The tentative operation plan data D1b are, for example, data regarding a tentative operation plan in which a hydrogen production amount is set to correspond to a hydrogen demand amount during the planning target period TP. In this case, for example, the tentative operation plan is set so that the hydrogen production amount is increased during a period of high hydrogen demand amount and the hydrogen production amount is decreased during a period of low hydrogen demand amount. The hydrogen demand amount during the planning target period TP may be a value of the hydrogen demand amount that is required for the planning target period TP, or it may be a value predicted based on the past actual hydrogen demand amount. The prediction of hydrogen demand amount may be performed, for example, using a demand prediction model created by learning from the past actual hydrogen demand amount. In addition, the tentative operation plan data D1b may be arbitrary data, such as data on the hydrogen production amount during the planning target period TP randomly set by the acquisition unit 210.

The performance data D1a and tentative operation plan data D1b acquired by the acquisition unit 210 may be configured to be stored and contents of the performance data D1a and tentative operation plan data D1b may be displayed on a screen of a display device (not illustrated). The display device may be included in the hydrogen system operation planning device 200 or may be installed outside the hydrogen system operation planning device 200.

### [A-2-2] Prediction unit 220

The prediction unit 220 is configured to acquire performance prediction data D2 based on the performance data D1a and tentative operation plan data D1b acquired by the acquisition unit 210, as illustrated in FIG. 2.

The performance prediction data D2 are data predicted regarding transition of the performance of the plurality of hydrogen production devices 110A, 110B during the planning target period TP. Here, the performance prediction data D2 include data predicted about a deterioration state in which the plurality of hydrogen production devices 110A, 110B deteriorate during the planning target period TP.

The prediction unit 220 predicts the performance of the plurality of hydrogen production devices 110A, 110B during the planning target period TP using a performance prediction model. The performance prediction model is a learning model, equivalent circuit model, electrochemical model, or other models, and is generated, for example, using the performance data D1a output from the acquisition unit 210 to the prediction unit 220. The performance prediction model is generated using regression analysis, neural network-based methods, or other methods.

The prediction unit 220 predicts, for example, operating efficiency of the plurality of hydrogen production devices 110A, 110B during the planning target period TP as the performance of the plurality of hydrogen production devices 110A, 110B during the planning target period TP. The operating efficiency is, for example, a ratio of the hydrogen production amount to the power supplied to the hydrogen production devices 110A, 110B, and decreases due to operating conditions such as, for example, a cumulative operation time and continuous operation time. Therefore, the prediction unit 220 predicts the operating efficiency during the planning target period TP from the performance data D1a and tentative operation plan data D1b using, for example, the performance prediction model generated by learning a relationship between the cumulative operation time and the operating efficiency, a relationship between the continuous operation time and the operating efficiency, and other relationships.

The prediction unit 220 may be configured to predict a response time (responsiveness), minimum duration, and the like as the performance of the hydrogen production devices 110A, 110B in addition to the operating efficiency.

The performance prediction data D2 acquired by the prediction unit 220 may be configured to be stored and contents of the performance prediction data D2 may be displayed on a screen of a display device (not illustrated).

### [A-2-3] Planning unit 230

The planning unit 230 receives the tentative operation plan data D1b and performance prediction data D2 as illustrated in FIG. 2. The planning unit 230 is configured to acquire operation plan data D3 by correcting (optimizing) the tentative operation plan corresponding to the tentative operation plan data D1b based on the performance prediction data D2 to prepare an operation plan P.

In the planning unit 230, the preparation of the operation plan P is performed, for example, by correcting the tentative operation plan so that the performance of the plurality of hydrogen production devices 110A, 110B during the planning target period TP meets a predetermined target value.

Here, the target value may be different between the plurality of hydrogen production devices 110A, 110B. The target value may not be constant throughout the entire planning target period TP but may be different at each point in time. In addition, the operation plan P may be prepared by making corrections to satisfy some of the target values for multiple factors when there are target values for each of the multiple factors, and when it is impossible to make corrections to satisfy all of the target values for the multiple factors. For example, the operation plan P may be prepared by dividing the planning target period TP into a plurality of divided periods and making corrections by switching the factors in each of the plurality of divided periods.

The planning unit 230 may set target values for the cumulative operation time and continuous operation time for the plurality of hydrogen production devices 110A, 110B, and make corrections to meet those target values.

The planning unit 230 may use the performance prediction model used by the prediction unit 220 when determining whether the performance of the plurality of hydrogen production devices 110A, 110B will meet the target values in the prepared operation plan P.

The planning unit 230 may make the correction by considering other factors such as cost and environmental impact. For example, the correction may be made by creating an equation for a mixed-integer linear programming problem in which the power supplied to the hydrogen production devices 110A, 110B is an independent variable, factors such as the amount of hydrogen produced by the hydrogen production devices 110A, 110B and the amount of hydrogen stored by the hydrogen storage device 120 are dependent variables, and factors such as cost are evaluation functions. The correction may also be made by various methods, such as metaheuristic methods such as genetic algorithms, and machine learning such as reinforcement learning. The evaluation function may be related to the cumulative operation time or continuous operation time.

The planning unit 230 prepares the operation plan P in an arbitrary unit for planning. For example, when the planning target period TP is several years, the planning unit is, for example, one day, several days, or one week. When, for example, the planning target period TP is one month or less, the unit for planning is, for example, 30 minutes.

The operation plan data D3 acquired by the planning unit 230 may be configured to be stored and contents of the operation plan data D3 may be displayed on a screen of a display device (not illustrated).

For example, when the planning unit 230 is unable to make the correction to meet the target values, the operation plan P may be prepared by the acquisition unit 210 acquiring the tentative operation plan data D1b regarding the updated tentative operation plan, the prediction unit 220 acquiring the performance prediction data D2 using the tentative operation plan data D1b, and other data, and the planning unit 230 correcting (optimizing) the updated tentative operation plan based on the performance prediction data D2.

### [A-2-4] Control unit 240

The control unit 240 is configured to output control data CTL to control the operation of the hydrogen system 100 based on the operation plan data D3 acquired by the planning unit 230, as illustrated in FIG. 2.

The control unit 240 controls the plurality of hydrogen production units 110A, 110B to perform operations to produce hydrogen during the planning target period TP based on the operation plan by outputting the control data CTL to the hydrogen system 100. Naturally, the control unit 240 may control the plurality of hydrogen production devices 110A, 110B to perform operations that differ from the operation plan as appropriate, depending on a state of the plurality of hydrogen production devices 110A, 110B.

### [B] Preparation method of operation plan P

The following is an example of concrete operations of the hydrogen system operation planning device 200 of this embodiment when preparing the operation plan P.

### [B-1] Acquisition of performance data D1a and tentative operation plan data D1b

When the hydrogen system operation planning system 200 prepares the operation plan P, the acquisition unit 210 first acquires the performance data D1a and tentative operation plan data D1b, as illustrated in FIG. 2.

The performance data D1a are the data regarding the performance of the plurality of hydrogen production devices 110A, 110B, as described above. For example, the acquisition unit 210 acquires actual data (data at the time of planning and data in the past) regarding the operating efficiency of each of the plurality of hydrogen production devices 110A, 110B as the performance data D1a.

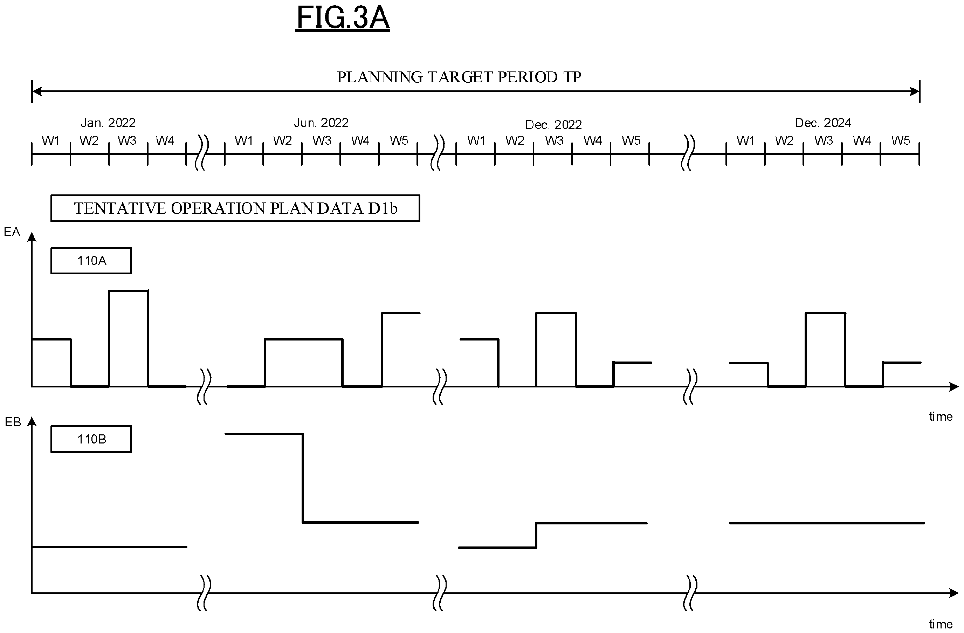

FIG. 3A is a diagram illustrating an example of the tentative operation plan data D1b in this embodiment.

FIG. 3A illustrates an example of the tentative operation plan data D1b in the case where the planning target period TP is from January 2022 to December 2024. In FIG. 3A, the upper row is the tentative operation plan data D1b prepared for the hydrogen production device 110A, which is one of the plurality of hydrogen production devices 110A and 110B, where the horizontal axis indicates time and the vertical axis indicates power EA (MW) to be supplied to the hydrogen production device 110A. In FIG. 3A, the lower row is the tentative operation plan data D1b prepared for the other hydrogen production device 110B between the plurality of hydrogen production devices 110A and 110B, where the horizontal axis indicates time and the vertical axis indicates power EB (MW) to be supplied to the hydrogen production device 110B.

As illustrated in FIG. 3A, the tentative operation plan data D1b are data regarding a tentative operation plan tentatively prepared for the operation plan to operate the plurality of hydrogen production devices 110A, 110B during the planning target period TP. The tentative operation plan data D1b are obtained, for example, by finding the amount of hydrogen produced by each of the plurality of hydrogen production devices 110A, 110B based on the hydrogen demand amount during the planning target period TP, and finding the power EA and power EB to be respectively supplied to the plurality of hydrogen production devices 110A, 110B from the hydrogen production amount, and acquired by the acquisition unit 210.

### [B-2] Preparation of performance prediction data D2

Next, as illustrated in FIG. 2, the prediction unit 220 acquires the performance prediction data D2 based on the performance data D1a and tentative operation plan data D1b acquired by the acquisition unit 210.

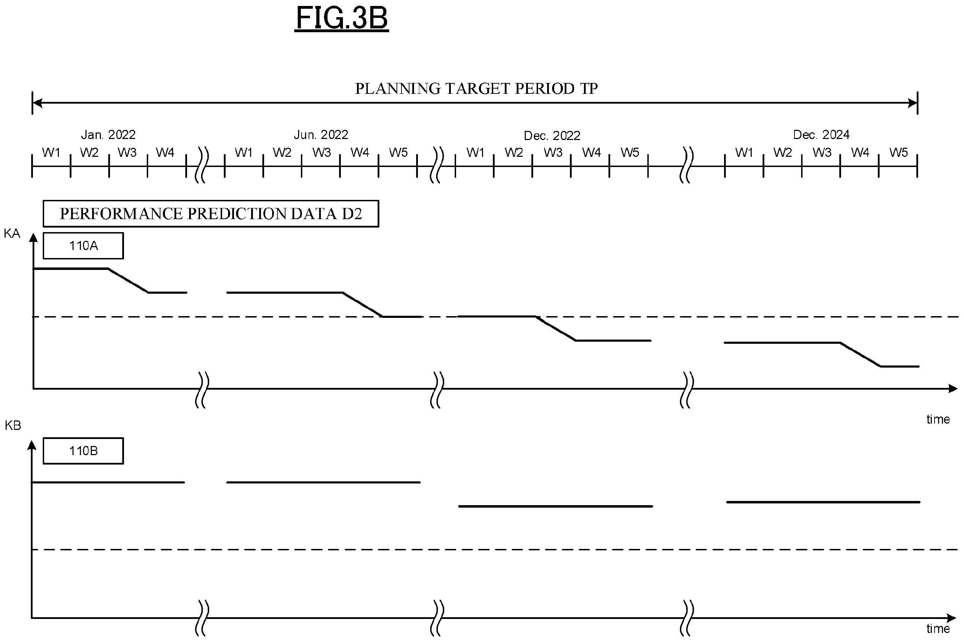

FIG. 3B is a diagram illustrating an example of the performance prediction data D2 in the embodiment.

FIG. 3B illustrates an example of the performance prediction data D2 in the case where the planning target period TP is from January 2022 to December 2024. In FIG. 3B, the upper row is the performance prediction data D2 acquired for the hydrogen production device 110A, which is one of the plurality of hydrogen production devices 110A, 110B, where the horizontal axis indicates time and the vertical axis indicates operating efficiency KA of the hydrogen production device 110A. In FIG. 3B, the lower row is the performance prediction data D2 acquired for the other hydrogen production device 110B between the plurality of hydrogen production devices 110A and 110B, where the horizontal axis indicates time and the vertical axis indicates operating efficiency KB of the hydrogen production device 110B.

As illustrated in FIG. 3B, the performance prediction data D2 are the data predicted for the deterioration state in which the operating efficiency of each of the plurality of hydrogen production devices 110A, 110B deteriorates during the planning target period TP.

The prediction unit 220 acquires the performance prediction data D2, for example, by predicting the operating efficiency of each of the plurality of hydrogen production devices 110A, 110B during the planning target period TP from the tentative operation plan data D1b using the performance prediction model, which is created from the performance data D1a output to the acquisition unit 210. For example, in the tentative operation plan data D1b, when the cumulative operation time during which the plurality of hydrogen production devices 110A, 110B are operated or the continuous operation time during which the operation is continued is long and the load of the plurality of hydrogen production devices 110A, 110B is large (large power supply), a larger decrease in operating efficiency is predicted.

### [B-3] Preparation of operation plan data D3

Next, as illustrated in FIG. 2, the planning unit 230 prepares the operation plan P by correcting (optimizing) the tentative operation plan corresponding to the tentative operation plan data D1b based on the performance prediction data D2 acquired by the prediction unit 220, and acquires the operation plan data D3.

In preparing the operation plan P, the tentative operation plan is corrected so that the performance of the plurality of hydrogen production devices 110A, 110B during the planning target period TP meets the predetermined target values.

In FIG. 3B above, a target lower limit value for the operating efficiency KA of the hydrogen production device 110A and a target lower limit value for the operating efficiency KB of the hydrogen production device 110B are illustrated by dashed lines. As illustrated in FIG. 3B, the predicted value of the operating efficiency KB of the hydrogen production device 110B is the target lower limit value or more over the entire planning target period TP. However, the predicted value of the operating efficiency KA of the hydrogen production device 110A is the target lower limit value or more during a former time period of the planning target period TP (from the first week W1 in January 2022 to the second week W2 in December 2022) but is below the target lower limit value during a latter time period of the planning target period TP (from the third week W3 in December 2022 to the fifth week W5 of December 2024). Therefore, the operation plan data D3 are acquired by correcting the tentative operation plan data D1b so that both the operating efficiency KA of the hydrogen production device 110A and the operating efficiency KB of the hydrogen production device 110B meet the target lower limit values during the planning target period TP.

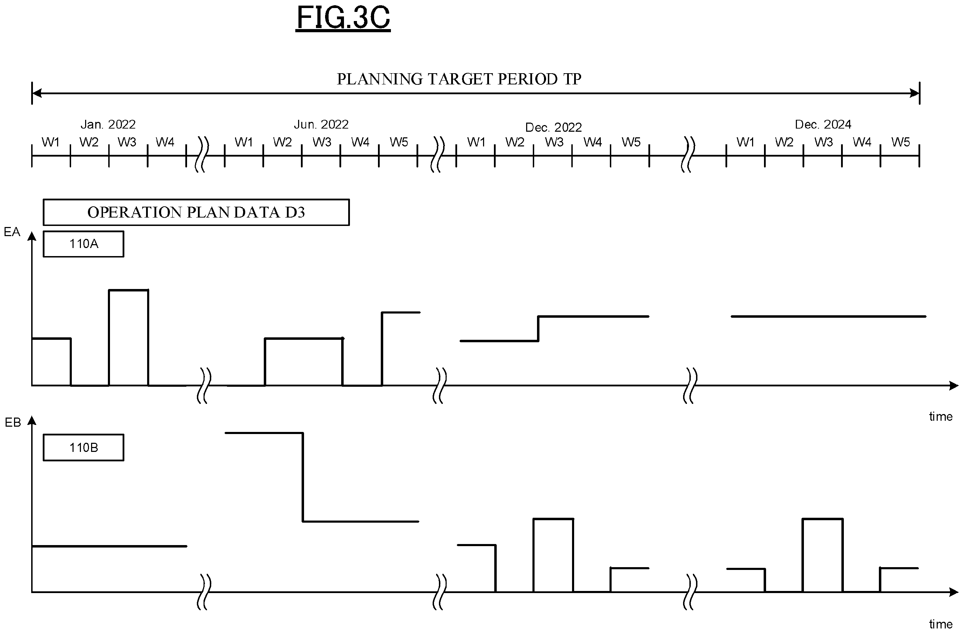

FIG. 3C is a diagram illustrating an example of the operation plan data D3 in the embodiment.

As illustrated in FIG. 3C, the operation plan data D3 are prepared, for example, by changing the transition of the power EA, power EB respectively supplied to the plurality of hydrogen production devices 110A, 110B during the latter time period of the planning target period TP (here, from the first week W1 in December 2022 to the fifth week W5 in December 2024) in the tentative operation plan data D1b (see FIG. 3A).

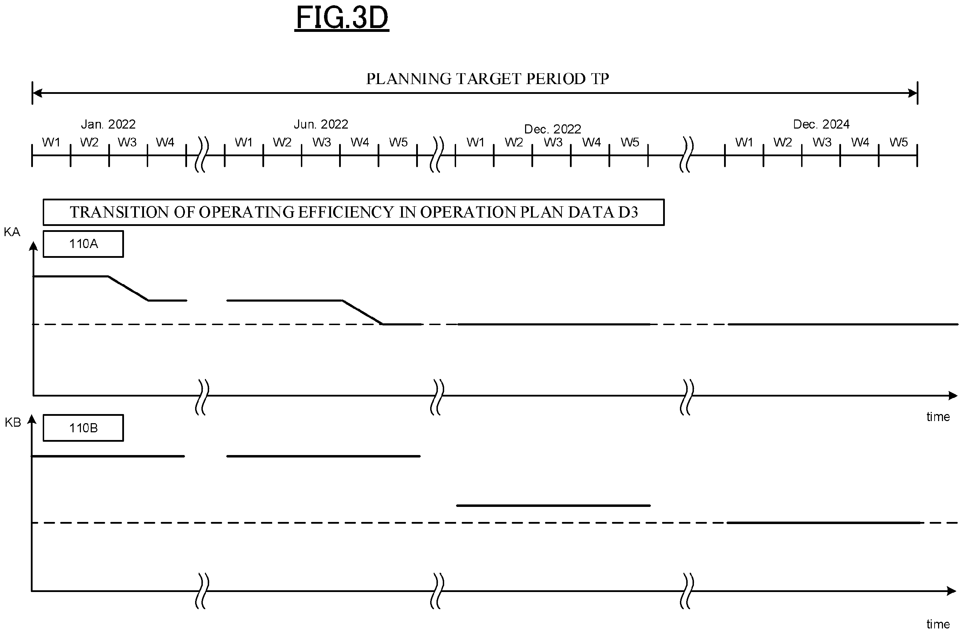

FIG. 3D is a diagram illustrating an example of transition of operating efficiency in the operation plan data D3 in the embodiment.

As illustrated in FIG. 3D, the operation plan data D3 are corrected so that both the operating efficiency KA of the hydrogen production device 110A and the operating efficiency KB of the hydrogen production device 110B are the target lower limit values (dashed lines) or more over the entire planning target period TP. For example, the operating efficiency is made the lower target limit value or more by changing the cumulative operation time, continuous operation time, and so on in the tentative operation plan data D1b.

Then, the control unit 240 controls the operation of the plurality of hydrogen production devices 110A, 110B based on the operation plan data D3, so that hydrogen production is performed during the planning target period TP.

### [C] Summary

As described above, the hydrogen system operation planning device 200 of this embodiment has the acquisition unit 210, the prediction unit 220, and the planning unit 230, and is configured to prepare the operation plan for operating the plurality of hydrogen production devices 110A, 110B during the planning target period TP in the hydrogen system 100 equipped with the plurality of hydrogen production devices 110A, 110B. The acquiring unit 210 acquires the performance data D1a regarding the performance of the plurality of hydrogen production devices 110A, 110B and the tentative operation plan data D1b regarding the tentative operation plan tentatively prepared for the operation plan. The prediction unit 220 acquires the performance prediction data D2 by predicting the performance of the plurality of hydrogen production devices 110A, 110B during the planning target period TP based on the performance data D1a and tentative operation plan data D1b acquired by the acquisition unit 210. For example, the prediction unit 220 acquires the performance prediction data D2 by predicting the deterioration state in which the operating efficiency of the plurality of hydrogen production devices 110A, 110B deteriorates. The planning unit 230 acquires the operation plan by correcting the tentative operation plan based on the performance prediction data D2 acquired by the prediction of the prediction unit 220. Hence, in this embodiment, hydrogen production can be performed with the performance of the plurality of hydrogen production devices 110A, 110B maintained at the target values during the planning target period TP. Therefore, this embodiment can easily achieve efficient hydrogen production in the hydrogen system provided with the plurality of hydrogen production devices 110A, 110B.

In this embodiment, the tentative operation plan data D1b are the data regarding the tentative operation plan prepared based on a prediction result of the hydrogen demand amount during the planning target period TP. Therefore, in this embodiment, hydrogen production can be performed to meet the hydrogen demand amount during the planning target period TP.

### [D] Modification example

The above embodiment is an example, and various modifications can be adopted.

### [D-1] Modification example 1

The above embodiment describes the case in which the hydrogen production unit 110 is configured to produce hydrogen using the power supplied from the power system 10 (power grid) external to the hydrogen system 100 (see FIG. 1), but the present invention is not limited thereto.

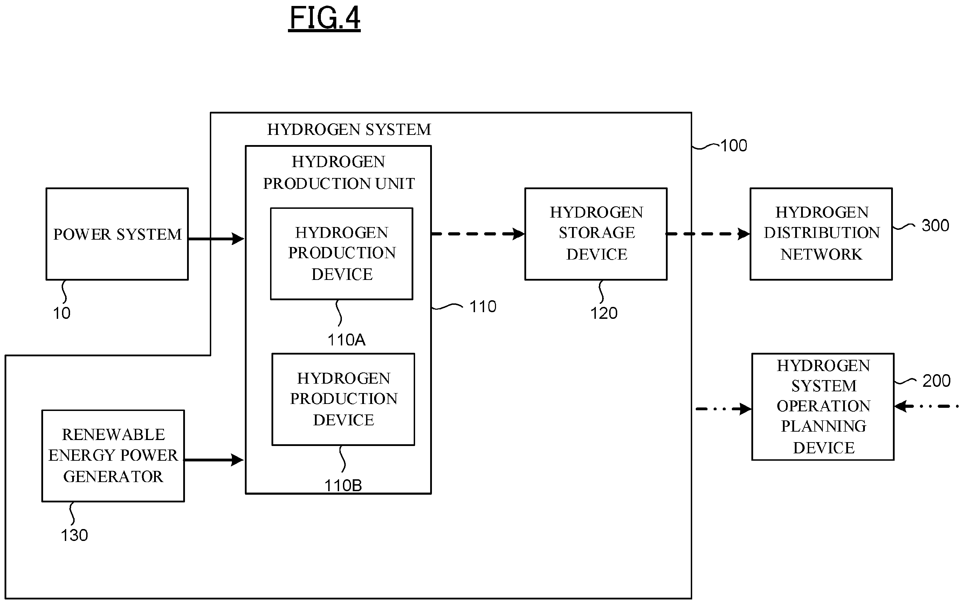

FIG. 4 is a block diagram schematically illustrating an overall configuration including the hydrogen system 100 and the hydrogen system operation planning device 200 in Modification example 1 of the embodiment.

As illustrated in FIG. 4, the hydrogen system 100 may be configured to include a renewable energy power generator 130 and the plurality of hydrogen production devices 110A, 110B produce hydrogen using power output from the renewable energy power generator 130.

The renewable energy power generator 130 is a device that generates and outputs power from renewable energy. The renewable energy power generator 130 is, for example, a photovoltaic power generator, which is configured to generate power by receiving sunlight and performing photoelectric conversion. In addition, the renewable energy power generator 130 may also be a wind power generator, biomass power generator, or other power generators.

The tentative operation plan data D1b acquired by the acquisition unit 210 are preferably data regarding a tentative operation plan prepared based on a prediction result of the power output by the renewable energy power generator 130 during the planning target period TP. The prediction of the power output by the renewable energy power generator 130 during the planning target period TP is performed, for example, using a prediction model created by learning a relationship between a season and the power generated.

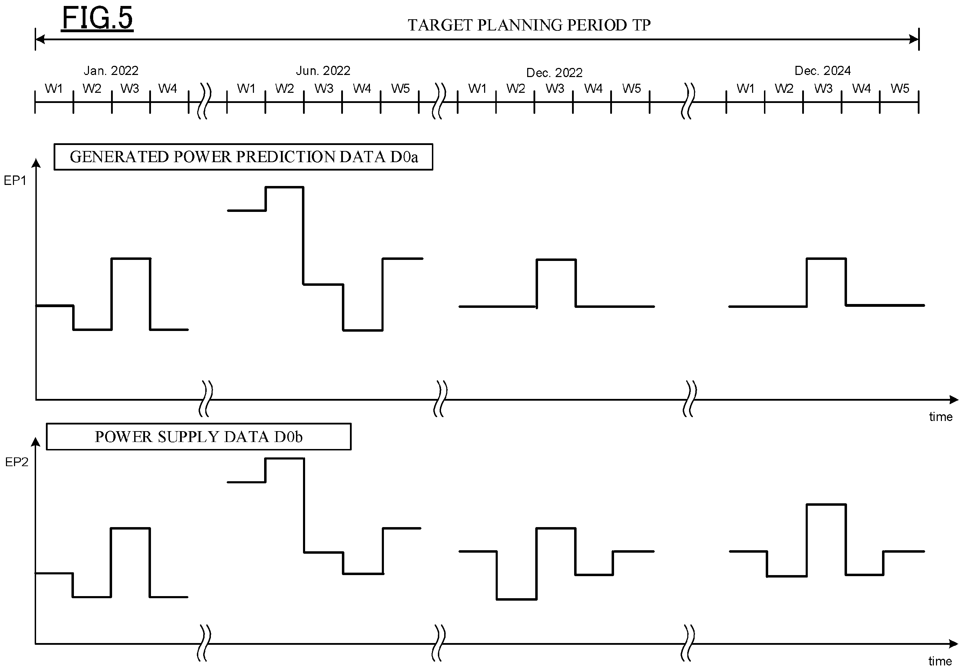

FIG. 5 is a diagram illustrating an example of generated power prediction data D0a regarding power output by the renewable energy power generator 130 and power supply data D0b regarding power supplied from the renewable energy power generator 130 to the hydrogen system 100 in Modification example 1 of the embodiment.

FIG. 5 illustrates an example of the generated power prediction data D0a and power supply data D0b in the case where the planning target period TP is from January 2022 to December 2024. In FIG. 5, the upper row is the generated power prediction data D0a, where the horizontal axis indicates time and the vertical axis indicates power EP 1 (MW) output by the renewable energy power generator 130. In FIG. 5, the lower row is the power supply data D0b, where the horizontal axis indicates time and the vertical axis indicates power EP2 (MW) supplied from the renewable energy power generator 130 to the hydrogen system 100.

As illustrated in the upper row of FIG. 5, the power EP1 output by the renewable energy power generator 130 fluctuates during the planning target period TP. Therefore, as illustrated in the lower row of FIG. 5, the power EP2 supplied from the renewable energy power generator 130 to the hydrogen system 100 is set to correspond to the power EP1 output by the renewable energy power generator 130. That is, it is set such that the more power EP1 that the renewable energy power generator 130 outputs, the more power EP2 supplied from the renewable energy power generator 130 to the hydrogen system 100.

As illustrated in FIG. 3A, the tentative operation plan data D1b are prepared based on the power supply data D0b. That is, the tentative operation plan is prepared so that the power EP2 supplied to the hydrogen system 100 is distributed to the plurality of hydrogen production devices 110A, 110B. Then, the operation plan is acquired by correcting the tentative operation plan based on the performance prediction data D2 after the performance prediction data D2 are acquired by predicting the performance of the plurality of hydrogen production devices 110A, 110B during the planning target period TP as in the case of the embodiment described above.

Therefore, in this modification example, the power output by the renewable energy power generator 130 during the planning target period TP can be used efficiently to perform the hydrogen production.

### [D-2] Modification example 2

In the above embodiment, the tentative operation plan data D1b may be data regarding the tentative operation plan prepared to respond to demand response (DR).

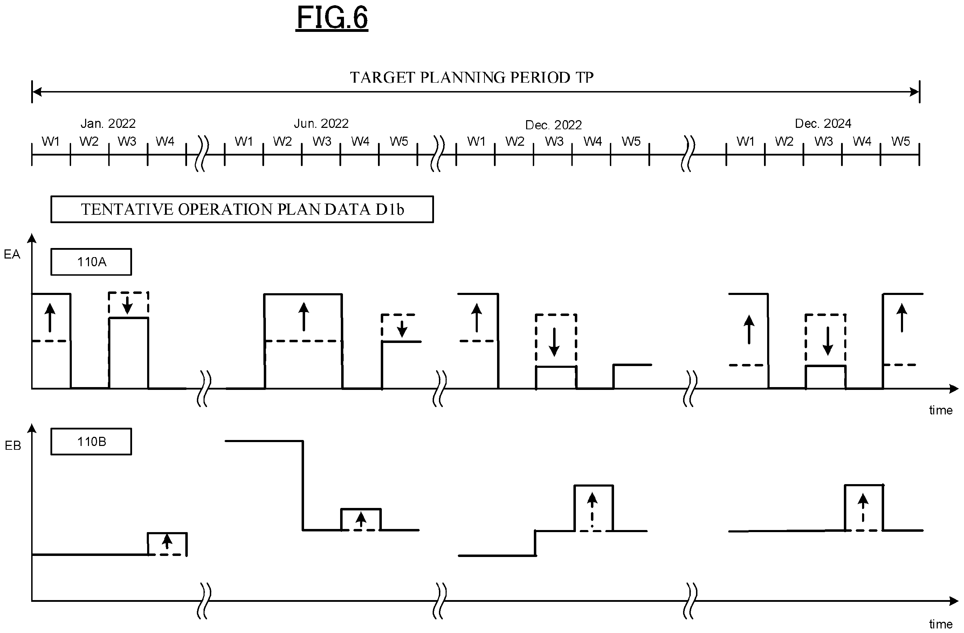

FIG. 6 is a diagram illustrating an example of the tentative operation plan data D1b in Modification example 2 of the embodiment.

FIG. 6 illustrates an example of the tentative operation plan data D1b in the case where the planning target period TP is from January 2022 to December 2024, as in FIG. 3B. FIG. 6 illustrates the case responding to up-DR (up arrow portions) and down-DR (down arrow portions) in the hydrogen production device 110A.

As illustrated in FIG. 6, the power supplied to the hydrogen production device 110A is increased in the case responding to the up DR (up arrow portion) in the hydrogen production device 110A. In contrast, the power supplied to the hydrogen production device 110A is decreased in the case responding to the down DR (down arrow portion) in the hydrogen production device 110A. Then, the power supplied to the hydrogen production device 110B is increased during a time period other than the time period in which the amount of hydrogen produced by the hydrogen production device 110A is reduced to respond to the down DR (down arrow portion).

Then, the prediction unit 220 acquires the performance prediction data D2, as in the case of the embodiment described above, by predicting the performance of the plurality of hydrogen production devices 110A, 110B during the planning target period TP regarding the tentative operation plan data D1b prepared as illustrated in FIG. 6. Thereafter, the planning unit 230 corrects the tentative operation plan based on the performance prediction data D2 to acquire the operation plan. Here, the planning unit 230 acquires the operation plan by correcting the demand response in the tentative operation plan so that the performance (for example, operating efficiency) of the plurality of hydrogen production devices 110A, 110B meets the target value during the planning target period TP.

Therefore, the efficient hydrogen production in the hydrogen system provided with the plurality of hydrogen production devices 110A, 110B can be easily achieved in this modification example.

Note that the demand response has multiple menus, and those multiple menus specify the response time (responsiveness), minimum duration, and so on. Therefore, when responding to the demand response as in this modification example, it is desirable to consider the response time (responsiveness) and minimum duration as well as the operating efficiency as the performance of the plurality of hydrogen production devices 110A, 110B. Concretely, it is preferable that the prediction unit 220 makes predictions on the response time (responsiveness) and minimum duration as the performance of the plurality of hydrogen production devices 110A, 110B during the planning target period TP, and the planning unit 230 prepares the operation plan by correcting the tentative operation plan so that the response time (responsiveness) and minimum duration achieve the target values during the planning target period TP.

The planning unit 230 may be configured to select a device to produce hydrogen in response to the demand response in the plurality of hydrogen production devices 110A, 110B according to results predicted for the response time (responsiveness) and minimum duration. Otherwise, the planning unit 230 may determine whether or not to respond to the demand response according to the results predicted for the response time (responsiveness) and minimum duration and may correct the tentative operation plan based on the determined results.

### [D-3] Other modification examples

The planning unit 230 may prepare the operation plan so that the hydrogen production device with a higher degree of performance deterioration is used preferentially over the hydrogen production device with a lower degree of performance deterioration between the plurality of hydrogen production devices 110A, 110B. In this way, the times when the plurality of hydrogen production devices 110A, 110B stop their operation to perform maintenance are different, and thus the operation plan that achieves efficient operation in the hydrogen system can be accurately prepared.

The planning unit 230 may be configured to correct the prepared operation plan P prior to the planning target period TP, if necessary. For example, the planning unit 230 may correct the prepared operation plan P according to the changed hydrogen demand amount, or other data after a predetermined time has elapsed after the preparation of the operation plan P. Otherwise, the planning unit 230 may correct the prepared operation plan P when a difference between predicted results and measured results as for the performance of the plurality of hydrogen production devices 110A, 110B exceeds a predetermined threshold value.

Even when a hydrogen production device is newly added to the hydrogen system 100, the hydrogen system operation planning device 200 may be used to execute the operation plan as in the case of the above embodiment. That is, even when characteristics (operation time, or the like) differ between the already installed hydrogen production device and the newly installed hydrogen production device later, the operation plan can be executed in the same manner as in the above case.

In the above description, the "cumulative operation time" may be a cumulative time of hydrogen production starting from the time when the hydrogen production unit 110 is newly installed in the hydrogen system 100, or it may be the cumulative time of hydrogen production starting from the time when maintenance is performed on the hydrogen production unit 110.

### <Other embodiments>

While certain embodiments of the present invention have been described, these embodiments have been presented by way of example only, and are not intended to limit the scope of the inventions. Indeed, those novel embodiments may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

### EXPLANATION OF REFERENCE SIGNS

10: power system, 100: hydrogen system, 110: hydrogen production unit, 110A: hydrogen production device, 110B: hydrogen production device, 120: hydrogen storage device, 130: renewable energy power generator, 200: hydrogen system operation planning device, 210: acquisition unit, 220: prediction unit, 230: planning unit, 240: control unit, 300: hydrogen distribution network

## Claims

1. A hydrogen system operation planning device, which prepares an operation plan for operating a plurality of hydrogen production devices during a planning target period in a hydrogen system including the plurality of hydrogen production devices that produce hydrogen by being supplied with power, the hydrogen system operation planning device comprising:
an acquisition unit configured to acquire performance data regarding performance of the plurality of hydrogen production devices and tentative operation plan data regarding a tentative operation plan tentatively prepared for the operation plan;
a prediction unit configured to acquire performance prediction data by predicting the performance of the plurality of hydrogen production devices during the planning target period based on the performance data and tentative operation plan data acquired by the acquisition unit, and
a planning unit configured to acquire the operation plan by correcting the tentative operation plan based on the performance prediction data acquired by the prediction of the prediction unit.

2. The hydrogen system operation planning device according to claim 1, wherein
the prediction unit acquires the performance prediction data by predicting a deterioration state in which the plurality of hydrogen production devices deteriorate during the planning target period.

3. The hydrogen system operation planning device according to claim 1, wherein
the tentative operation plan data are data regarding the tentative operation plan prepared based on a prediction result of a hydrogen demand amount during the planning target period.

4. The hydrogen system operation planning device according to claim 1, wherein
the hydrogen system includes
a renewable energy power generator for generating and outputting power from renewable energy,
the plurality of hydrogen production devices are configured to produce hydrogen using the power output from the renewable energy power generator, and
the tentative operation plan data are data regarding the tentative operation plan that is prepared based on a prediction result of the power output by the renewable energy power generator during the planning target period.

5. The hydrogen system operation planning device according to claim 1, wherein
the tentative operation plan data are data regarding the tentative operation plan that is prepared in response to demand response.

6. The hydrogen system operation planning device according to any one of claims 1 to 5, further comprising:
a control unit configured to control the operation of the hydrogen system based on the acquired operation plan prepared by the planning unit.
